# EUROPÄISCHE PATENTSCHRIFT

(11) **EP 2 315 543 B1**
(45) Veröffentlichungstag und Bekanntmachung des Hinweises auf die Patenterteilung: **14.11.2012**
(21) Anmeldenummer: 09757545.0
(22) Anmeldetag: 03.06.2009
(51) Int. Cl.: A47J 43/07

(54) **KÜCHENMASCHINE MIT EINEM RÜHRGEFÄSS**
KITCHEN UTENSIL WITH A STIRRER VESSEL
ROBOT MÉNAGER MUNI D'UN BOL DE MÉLANGE

(30) Priorität: 07.06.2008 DE 102008027353
(43) Veröffentlichungstag der Anmeldung: 04.05.2011
(73) Patentinhaber: Vorwerk & Co. Interholding GmbH, 42275 Wuppertal (DE)
(72) Erfinder: SCHOMACHER, Jutta, 42489 Wülfrath (DE); ZUBER, Daniel, 42109 Wuppertal (DE); BREDE, Maike, 58454 Witten (DE); WEBER, Klaus-Martin, 42109 Wuppertal (DE); SAUERWALD, Andres, 46238 Bottrop (DE)
(74) Vertreter: Müller, Enno
(86) Internationale Anmeldenummer: PCT/EP2009/056787
(87) Internationale Veröffentlichungsnummer: WO 2009/147164

(56) Entgegenhaltungen:
- EP-A- 1 685 783
- GB-A- 2 436 876
- US-A- 3 171 636

## Beschreibung

Die Erfindung betrifft eine Küchenmaschine mit einem Rührgefäß nach den Merkmalen des Oberbegriffes des Anspruches 1.

Küchenmaschinen der in Rede stehenden Art sind bekannt. So wird beispielsweise auf die DE 100 05 920 A1 verwiesen. In dieser Patentanmeldung ist eine Küchenmaschine beschrieben, deren Gehäuse über voneinander distanzierte Fußsockel zum Abstellen auf eine Unterlage, wie beispielsweise einer Küchenarbeitsplatte ausgebildet ist. In jedem Fußsockel ist zur Ausbildung der Wiegevorrichtung ein Wiegesensor vorgesehen. Entsprechend wirkt das Gesamtgewicht der Küchenmaschine inklusive Rührgefäß und dem in dem Rührgefäß aufgenommenen Medium, weiter auch mit dem Gewicht des Gehäuses sowie den in dem Gehäuse integrierten Geräteelementen wie Elektromotor usw. auf die Wiegevorrichtung ein. Der Aufnahmebereich des Gerätes zur Aufnahme einer Abwiegemenge ist durch das, die abzuwiegende Menge aufnehmende Rührgefäß gebildet.

Der Inhalt der vorgenannten Patentanmeldung wird hiermit vollinhaltlich in die Offenbarung vorliegender Erfindung mit einbezogen, auch zu dem Zwecke, Merkmale dieser Patentanmeldung in Ansprüche vorliegender Erfindung mit einzubeziehen.

Eine Küchenmaschine mit einer Wiegeeinrichtung ist darüber hinaus aus der EP 1 685 783 A1 bekannt. Hier ist in üblicher Weise eine Wiegeschale vorgesehen, die auf eine Wiegeeinrichtung wirkt. Diese bekannte Gestaltung der Küchenmaschine ist hinsichtlich unterschiedlicher bei einem Zubereitungsvorgang abzuwiegender Mengen nicht zufrieden stellend.

Ausgehend von dem genannten Stand der Technik beschäftigt sich die Erfindung mit der Aufgabe, eine insbesondere im Hinblick auf das Abwiegen von bspw. Kleinstmengen günstige Gestaltung der Küchenmaschine anzugeben.

Diese Aufgabe ist beim Gegenstand des Anspruches 1 gelöst, wobei darauf abgestellt ist, dass die Wiege-Aufnahmefläche integriert, durch eine muldenförmige Gestaltung des Aufnahmebereiches, mit einem Kleinstmengen-Messgefäß ausgebildet ist, derart, dass materialabhängig über das Volumen eine Gewichtsbestimmung ermöglicht ist, und dass entweder eine Mehrzahl von muldenförmigen Vertiefungen mit unterschiedlichen Größen, um so unterschiedliche Volumen abmessen zu können, vorgesehen sind, oder dass lediglich eine muldenartige Vertiefung vorgesehen ist, deren Volumen über einen Schieber unterschiedlich eingestellt werden kann, so dass der Benutzer die abzuwiegende Menge vorgeben kann.

Dem Benutzer wird ein Aufnahmebereich angeboten, in welchem dieser in das Rührgefäß einzubringende Zutaten vor einem Einfüllen in das Rührgefäß abwiegen kann. Dies erweist sich insbesondere bei Kleinstmengen von Vorteil wie beispielsweise bei Gewürzen. Bei der Zubereitung von Lebensmitteln in Küchenmaschinen müssen oft vergleichsweise kleine Mengen im Bereich von wenigen Gramm abgewogen werden, die dann während des Zubereitungsprozesses dem Rührgefäß zugegeben werden. Die bekannten Lösungen fordern es, dass diese kleinen Mengen, wie beispielsweise Gewürze direkt in das Rührgefäß gegeben werden. Die zugegebene Kleinstmenge wird über die geräteseitige Wiegevorrichtung zwar erfasst, jedoch erweist sich eine solche Anwendung als unpraktisch. So kann es sehr leicht geschehen, dass versehentlich eine zu große Menge zugegeben wird, beispielsweise 15 g anstelle von 10 g. Der Anwender ist daher in einem solchen Fall gezwungen, die zuviel eingefüllte Menge aus dem Rührgefäß zu entfernen, was umständlich und oft nicht mehr möglich ist. Durch den gesonderten Aufnahmebereich ist ein Abwiegen insbesondere von Kleinstmengen ermöglicht. Dieser gesonderte Aufnahmebereich ist bevorzugt zusätzlich zu der Gesamt-Wiegevorrichtung der Küchenmaschine, d. h. weiter zusätzlich zu einer Grobmengen-Wiegevorrichtung vorgesehen, weiter alternativ jedoch auch in einer möglichen Ausführungsform als einzige Wiegevorrichtung der Küchemaschine, über welche die dem Rührgefäß zuzugebenden Rezeptanteile vor Einfüllen in das Rührgefäß abgewogen werden können. Als Kleinstmengen werden in vorliegender Erfindung Mengen von bis zu 150 g, weiter insbesondere bis zu 100 g bezeichnet, wobei weiter im üblichen Gebrauch abzuwiegende Kleinstmengen in ein- oder zweistelligen Grammbereich liegen, gegebenenfalls sogar im Milligramm-Bereich. Bei einer Grobwiegung im Bereich von 100 g bis etwa 2 kg, alternativ bis 6 kg, liegt typischerweise eine Toleranz von etwa 10 % vor. Bei einer Feinwiegung im Bereich von 1 g bis 50 g, alternativ bis zu 100 g, bevorzugt nur eine Toleranz von etwa 5 %.

Der gesonderte Aufnahmebereich ist der Küchenmaschine zugeordnet bzw. dieser zuordbar, ist entsprechend im weiteren Sinne Bestandteil der Küchenmaschine, so dass keine gesonderte Wiegevorrichtung zum Abwiegen von kleinsten Mengen nötig ist. Der gesonderte Aufnahmebereich weist ein Wiegeteil mit einer Wiege-Aufnahmefläche auf, welches Wiegeteil zur Benutzung frei liegt oder in einen Freistand überführbar ist. Bei letzterer Alternative ist das Wiegeteil zur Nutzung beispielsweise an dem Gehäuse schiebe- oder drehverlagerbar, dies weiter bevorzugt aus einer Verstecktlage in die Benutzungsstellung und umgekehrt. Weiter alternativ kann das Wiegeteil auch an dem Gehäuse einhängbar oder aus diesem ausklappbar gestaltet sein, so dass auch hierbei bei Nichtbenutzung das Wiegeteil in eine nicht störende Lage verbracht werden kann.

Die Wiege-Aufnahmefläche ist integriert mit einem Kleinstmengen-Messgefäß mit einem Aufnahmevolumen von beispielsweise bis zu 150 g ausgebildet. Die integrierte Ausgestaltung kann in einfachster Form durch eine muldenartige Vertiefung der Wiege-Aufnahmefläche des Wiegeteils gebildet sein. Ist das gesonderte Wiegeteil abnehmbar an dem Gehäuse beispielsweise durch Einhängen halterbar, kann über ein in dem Wiegeteil integriert ausgebildetes Messgefäß die abgewogene Kleinstmenge in das Rührgefäß verbracht werden. Bei einer Ausbildung des Wiegeteils als Teil des Gehäuses bzw. als vom Gehäuse beispielsweise ausklappbares oder schiebeverlagerbares Teil bietet sich eine Lösung mit einem gesonderten Messgefäß an, über welches die abgewogene Kleinstmenge in das Rührgefäß überführt werden kann.

Es ist auch vorgesehen, dass der Aufnahmebereich auf einen gesonderten Kleinstmengen-Wiegesensor wirkt. Dieser Kleinstmengen-Wiegesensor ist an den üblichen Wiegebereich von Kleinstmengen angepasst, weist entsprechend einen minimalen Toleranzbereich auf, so beispielsweise einen Toleranzbereich von ± 1 g, weiter insbesondere einen Toleranzbereich im Milligrammbereich. Die üblichen Wiegesensoren zur Ermittlung von Grobmengen, weiter Wiegesensoren zur Ermittlung des Gesamtgewichtes von Küchenmaschine und in dem Rührgefäß aufgenommenen Speisen weisen demgegenüber Toleranzbereiche auf, die zur Ermittlung von Kleinstmengen nicht akzeptabel sind. Der Kleinstmengen-Wiegesensor ist besonders gut auf den Kleinstmengen-Wiegebereich abgestimmt, wodurch eine hohe Genauigkeit gegeben ist, was insbesondere beim Abwiegen von Gewürzen oder dergleichen gewünscht ist.

Durch die muldenförmige Gestaltung ist materialabhängig über das Volumen eine Gewichtsbestimmung ermöglicht. Zufolge dieser Ausgestaltung wird über das Volumen des Wiegegutes die Gewichtskraft bestimmt, dies bei bekannter Dichte des Wiegegutes. Dieser muldenförmige Aufnahmebereich ist der Küchenmaschine zugeordnet, bzw. an dieser ausgebildet, ist weiter insbesondere Bestandteil der Küchenmaschine bzw. des Küchenmaschinenzubehörs. So sind weiter Vertiefungen, Mulden oder Nuten in dem Aufnahmebereich vorgesehen, die ein bekanntes Volumen von Wiegegut aufnehmen können. Darüber hinaus können mehrere Vertiefungen mit unterschiedlichen Größen vorgesehen sein, um unterschiedliche Volumen unterschiedlicher Zutaten abmessen zu können. Für Zutaten, die in kleinen Mengen zugewogen werden, beispielsweise Gewürze, Salz, Trockenhefe oder ähnliches, ist die benötigte Masse in ein Volumen umgerechnet, welches dann dem Volumen einer der Vertiefungen entspricht.

In einer bevorzugten Ausgestaltung des Erfindungsgegenstandes ist vorgesehen, dass das gesondert auf der Wiege-Aufnahmefläche aufzunehmende oder integriert hiermit ausgebildete Kleinstmengen-Messgefäß konisch oder trichterförmig gestaltet ist. Hierdurch ist sichergestellt, dass das Wiegegut, insbesondere das Kleinstmengen-Wiegegut stets in einer definierten Position platziert ist. Das Kleinstmengen-Messgefäß bzw. die mit diesem integrierte Wiege-Aufnahmefläche ist im Sinne der Schwerkraft trichterförmig bzw. konisch nach unten sich verjüngend ausgebildet, so dass der Schwerpunkt des eingefüllten bzw. aufgetragenen Wiegeguts insbesondere bei einer Ausgestaltung des Wiegeteiles mit einem definierten Hebelarm zum zugeordneten Sensor stets in einem vordefinierten Abstand zum Sensor liegt.

In einer Weiterbildung weist der Aufnahmebereich eine gesonderte Wiegeaufnahme für das Wiegeteil auf, so beispielsweise bei einer Ausgestaltung, bei welcher das Wiegeteil an dem Gehäuse im Aufnahmebereich einhängbar oder aufsteckbar ist.

Als gebrauchstechnisch günstig erweist sich eine Ausgestaltung, bei welcher das Wiegeteil in eine Vorstandslage bringbar ist, dies weiter aus einer Verstecktlage heraus bei nicht Gebrauch des Wiegeteils. So kann weiter beispielsweise das Wiegeteil unterseitig des Gehäuses, weiter beispielsweise bodennah schiebeverlagerbar angeordnet sein, weiter auch ausklappbar, insbesondere um eine Vertikale schwenkbar aus einer Verstecktlage in die Nutzungsstellung und umgekehrt.

Der weiter vorgesehene Kleinstmengen-Sensor ist in einer Ausgestaltung des Erfindungsgegenstandes im Bereich des in die Vorstandslage bringbaren Wiegeteiles angeordnet, so dass entsprechend bevorzugt das Wiegeteil unmittelbar auf den Kleinstmengen-Sensor einwirkt oder der Sensor Teil des Wiegeteiles ist. Hierzu kann sich der Kleinstmengen-Wiegesensor im Vorstandsbereich befinden, d. h. weiter in dem nach Verbringung des Wiegeteiles in die Vorstandslage bevorzugt abragenden, endseitig die Wiege-Aufnahmefläche aufweisenden Wiegeteils. Zufolge dieser Ausgestaltung wird mit einer Schiebe- oder Drehverlagerung des Wiegeteils aus einer Nichtbenutzungsstellung in eine Benutzungsstellung sogleich der Kleinstmengen-Wiegesensor verlagert. Weiter ist hierdurch der Kleinstmengen-Wiegesensor unmittelbar dem Bereich der Wiege-Aufnahmefläche zugeordnet. Alternativ kann der Kleinstmengen-Wiegesensor auch im Geräteinneren angeordnet sein beispielsweise derart, dass das einzuhängende, auszuklappende oder schiebezuverlagernde Wiegeteil nach entsprechender Anordnung bzw. Verlagerung des Wiegeteils auf den geräteseitigen Kleinstmengen-Wiegesensor einwirkt. So ist weiter beispielsweise der Kleinstmengen-Wiegesensor unmittelbar dem Aufnahmebereich für das Wiegeteil zugeordnet und allein zur Kleinstmengenbestimmung einer auf dem gesonderten Wiegeteil aufgebrachten Kleinstmenge ausgebildet.

Des Weiteren können an dem Gerät beispielsweise drei Wiegesensoren vorgesehen sein, wobei ein Wiegesensor als Kleinstmengen-Sensor ausgebildet ist. So kann weiter, wie aus dem eingangs beschriebenen Stand der Technik bekannt, das Gerät sich über drei, jeweils Wiegesensoren aufweisende Standfüße auf einer Arbeitsfläche oder dgl. abstützen. Zwei dieser drei Wiegesensoren sind zur üblichen Grobmengenmessung ausgelegt, d. h. zur Gewichtsbestimmung der in dem Rührgefäß der Küchenmaschine aufgenommenen Menge. Der Kleinstmengen-Sensor als dritter Wiegesensor dient zur Gewichtsbestimmung einer auf dem gesonderten Wiegeteil aufgetragenen Kleinstmenge, kann darüber hinaus jedoch auch zusätzlich zur Grobmengenbestimmung herangezogen werden, dies weiter insbesondere bei einer Dreipunkt-Auflage der Küchenmaschine über die drei Wiegesensoren. In diesem Zusammenhang erweist es sich von Vorteil, wenn beispielsweise bei einer durch Ziehen oder Schwenken aktivierten Kleinstmengenmessung die zur Grobmessung dienenden Wiegesensoren deaktiviert sind. Entsprechend wird durch eine Verlagerung des Wiegeteils in eine Benutzungsstellung, weiter auch beispielsweise durch ein Einhängen des gesonderten Wiegeteils an den hierfür vorgesehenen Aufnahmebereich der Küchenmaschine ein Schalter oder dgl. belastet, der die Deaktivierung der Grobmengen-Wiegesensoren herbeiführt.

Günstig erweist sich eine Weiterbildung, bei welcher sowohl ein Grob- als auch ein Kleinstmengen-Wiegesensor auf dieselbe Auswerteeinheit geschaltet ist. Die Auswerteeinheit beinhaltet unter anderem ein Display zur Gewichtsanzeige. Ist im Zusammenhang mit einer Verbringung des gesonderten Wiegeteiles von einer Nichtbenutzungsstellung in eine Benutzungsstellung zugleich eine Deaktivierung der Grobmengen-Wiegesensoren bzw. eine Aktivierung des Kleinstmengen-Wiegesensors vorgesehen, kann in einer Weiterbildung des Erfindungsgegenstandes über diese Erfassung zugleich auch eine Umstellung der Auswerteeinheit, insbesondere hinsichtlich des Gewichtsbereiches vorgenommen werden, so weiter beispielsweise eine Umschaltung von einer Kilogramm-Anzeige in eine Gramm-Anzeige oder von einer Gramm-Anzeige in eine Milligramm-Anzeige bei einer Kleinstmengenmessung. Darüber hinaus ist im Zuge einer Kleinstmengenmessung durch entsprechende Schaltung der Auswerteeinheit eine genauere Auswertung des Sensorsignals durch erhöhte Genauigkeit durchgeführt. So werden beim Umschalten von Grobwiegung auf Feinwiegung in der Auswerteelektronik geänderte Kalibrierkurven bzw. -werte verwendet. Die Kalibrierkurven bzw. -werte bilden den Zusammenhang zwischen Sensorsignal und zu wiegender Masse ab. Wenn die Anzahl der Wiegesensoren verändert wird, wird auch eine geänderte Kalibrierkurve genutzt. Die Kalibrierkurve bzw. -werte für den Feinwiegesensor werden mit höherer Genauigkeit aufgenommen, beispielsweise indem eine höhere Anzahl von Kalibrierpunkten verwendet wird. Die Auswertelemente für die Feinwiegung können gegenüber denen einer Grobwiegung eine verbesserte Abschirmung der Elektronik gegen Störfelder aufweisen und/oder mit engere Bauteiltoleranzen aufweisenden elektronischen Bauteilen bestückt sein.

In weiterer alternativer Ausgestaltung ist die Wiege-Aufnahmefläche an dem das Rührgefäß überdeckenden Rührgefäßdeckel ausgebildet, weiter beweglich an einen an dem Rührgefäßdeckel angebrachten gesonderten Wiegeteil. Letzteres wirkt weiter in bevorzugter Ausgestaltung auf einen unmittelbar zugeordneten Kleinstmengen-Wiegesensor. Alternativ kann dieser jedoch auch im Inneren der Küchenmaschine, weiter beispielsweise auch als ein Gerätefuß ausgebildet sein. Die bewegliche Ausgestaltung des Wiegeteils erweist sich insbesondere dann von Vorteil, wenn der Rührgefäßdeckel eine Einfüllöffnung aufweist, über die die abgewogene Kleinstmenge vom Wiegeteil bzw. von der Wiege-Aufnahmefläche direkt in das Rührgefäß zur Vermengung in demselben eingeführt werden kann. Das Wiegeteil kann hierzu beispielsweise auf dem Rührgefäßdeckel in Richtung auf die Rührgefäßdeckelöffnung klappbar angeordnet sein. Der Kleinstmengen-Wiegesensor ist bei einer derartigen Ausgestaltung bevorzugt im Rührgefäßdeckel angeordnet.

Um einen mechanischen Schutz gegen Überlast bei an dem Gehäuse einhängbaren oder schiebeverbundenen Wiegeteil zu bieten, ist weiter vorgesehen, dass das Wiegeteil einen Stützfuß aufweist, der sich in der Wiege-Bereitschaftsstellung entsprechend einer maximalen Absenkbarkeit des Wiegeteils sich oberhalb einer Standfläche des Gerätes befindet. Entsprechend erstreckt sich in der Wiege-Bereitschaftsstellung das Wiegeteil in einer die Messung ermöglichenden, insbesondere frei auskragenden Stellung. Wird das Wiegeteil überbelastet, so insbesondere durch Auftrag einer gewichtsmäßig übergroßen Menge auf die Wiege-Aufnahmefläche, führt dies zu einer Überbelastung des Wiegeteiles in Form eines Absenkens der Wiege-Aufnahmefläche, gegebenenfalls unter entsprechender Biegebeanspruchung des an dem Gehäuse gehalterten, frei auskragenden Biegeteilabschnitts. Dieser Absenkweg des Wiegeteils ist durch den unterseitig vorgesehenen, sich auf der Standfläche des Gerätes oder alternativ am Gerät selbst abstützenden Stützfuß eingeschränkt, so dass das Wiegeteil keiner Überbelastung ausgesetzt wird.

Eine gebrauchsvorteilhaft günstige Ausgestaltung bietet die Möglichkeit der Aktivierung der Wiegefunktion während des Rührwerkbetriebs der Küchenmaschine, dies weiter sowohl hinsichtlich einer Grobmengen-Bestimmung als auch hinsichtlich einem Abwiegen von Kleinstmengen. Entsprechend kann während des Wiegevorganges der Zubereitungsprozess in dem Rührgefäß weiterlaufen. Die abgewogene Grob- und/oder Kleinstmenge kann entsprechend in den laufenden Rührprozess eingebracht werden. Um während des Rührwerkbetriebes etwaige, die Wiegefunktion beeinträchtigende Schwingungen zu reduzieren, ist weiter vorgesehen, dass die Aktivierung der Wiegefunktion während des Betriebs des Rührwerks mit einer Reduktion der Rührwerkdrehzahl einhergeht, so beispielsweise auf eine Drehzahl von wenigen 100 U/min bis hin zu einer Drehzahl unter 100 U/min, gegebenenfalls bis hin zu einem zwischenzeitigen Stillstand. Bevorzugt ist ein Drehzahlreduzierung auf 10 bis 100 U/min, weiter bevorzugt auf 40 U/min vorgesehen.

In einer alternativen Ausgestaltung des Erfindungsgegenstandes ist mit dem Einhängen oder Ausschieben oder Ausklappen des Wiegeteils eine Abstützung des Wiegeteils auf einem gesonderten, zusätzlichen Fuß erreicht. Dieser Fuß sitzt in der Wiegestellung bevorzugt auf der Standfläche des gesamten Gerätes auf, kann weiter bevorzugt zugleich den Kleinstmengen-Wiegesensor aufweisen bzw. durch diesen ausgebildet sein. Als besonders vorteilhaft erweist sich hierbei eine Ausgestaltung, bei welcher der Fuß an dem einhäng-, ausklapp- oder schiebeverlagerbaren Wiegeteil angeordnet ist und so zugleich im Zuge der Positionierung des Wiegeteiles in die Benutzungsstellung platziert wird.

Insbesondere bei einer nicht ortsfest an dem Gehäuse in einem entsprechenden Aufnahmebereich ausgebildeten Wiege-Aufnahmefläche erweist es sich weiter von Vorteil, wenn das entsprechend beispielsweise einhängbare oder ausklappbar- bzw. schiebeverlagerbare Wiegeteil über ein Dämpfungsglied mit dem Gehäuse verbunden ist, über welches Dämpfungslied Schwingungen aus dem Gerätegehäuse, insbesondere hervorgerufen durch einen Rührwerksbetrieb minimiert werden. Es ist so eine mechanische Entkopplung zwischen Wiegeteil und Gehäuse erreicht, so dass dynamische Störkräfte gedämpft sind. Das Dämpfungsglied ist in einer Ausführungsform Teil des Wiegeteils, so weiter beispielsweise durch Ausgestaltung des Wiegeteils aus flexiblen, federelastischen Gliedern oder dgl.

Auch kann das auf einen gesonderten Kleinstmengen-Wiegesensor wirkende Geräteteil ein die Innenfläche des Rührgefäßes bildender Bodenabschnitt sein. Entsprechend ist zufolge dieser Ausgestaltung der Kleinstmengen-Wiegesensor unmittelbar dem Zubereitungsbereich, in welchem die Kleinstmenge eingefüllt werden soll, zugeordnet. Der Kleinstmengen-Wiegesensor ist hierbei Teil des Rührgefäßes. Hierbei ist weiter der Kleinstmengen-Wiegesensor unterhalb des die Innenfläche des Rührgefäßes bildenden Bodenabschnitts angeordnet, wobei weiter der Bodenabschnitt des Rührgefäßes bevorzugt einen Doppelboden aufweist, dessen Bodenabschnitte in Vertikalerstreckung des Rührgefäßes relativ zueinander beweglich angeordnet sind und wobei der zwischen den Bodenabschnitten angeordnete Kleinstmengen-Wiegesensor die Verbindung der beiden Bodenabschnitte untereinander bildet. Die Kleinstmengen-Wiegefunktion kann bei einer derartigen Ausgestaltung zufolge der entsprechenden Anordnung sowohl bei Anordnung des Rührgefäßes in der Küchenmaschine bzw. in der zugeordneten Rühraufnahme als auch bei der Küchenmaschine entnommenen, gegebenenfalls auf einer Standfläche abgestellten Rührgefäßes genutzt werden. Auch bietet sich in diesem Zusammenhang eine mögliche Umschaltung von Grob- auf Feinwiegung und umgekehrt an, welche Umschaltung des Weiteren auch manuell durch den Benutzer herbeigeführt werden kann.

Zur Anzeige des ermittelten Gewichts, bevorzugt sowohl eines ermittelten Grobmittel-Gewichts als auch eines ermittelten Kleinstmengen-Gewichts - ist ein Display vorgesehen. Dieses ist in weiterer Ausgestaltung unmittelbar an dem Rührgefäß vorgesehen, so insbesondere wandungsaußenseitig der Rührgefäßwandung. In bevorzugter Ausgestaltung ist die Kleinstmengen-Abwiegung in dem Rührgefäß unmittelbar auf dem an diesen angeordneten Display darstellbar.

Die Übertragung der Sensorsignale, jedenfalls die des Kleinstmengen-Wiegesensors, werden in weiterer Ausgestaltung durch Lichtwellen oder elektromagnetische Wellen zur weiteren Auswertung übertragen. Alternativ ist die Signalübertragung auch über ein, bevorzugt einen geringen Querschnitt aufweisendes Kabel erreichbar.

Auch können zwei Wiege-Aufnahmeflächen vorgesehen sein, die gesondert erfasst sind, zur Durchführung einer Referenzmessung. Über eine solche Referenzmessung wird ein zu messendes Gewicht mit einer Referenzmasse verglichen, dies nach dem Prinzip einer Komparatorwaage oder eines Massenkomparators. Die beiden Wiege-Aufnahmeflächen weisen hierzu bevorzugt jeweils einen Sensor zur Feinstmengenbestimmung auf. Alternativ kann auch nur ein Sensor vorgesehen sein, der beispielsweise wechselnd angesteuert der einen oder anderen Wiege-Aufnahmefläche zugeordnet ist.

Die Wiege-Aufnahmefläche ist des Weiteren zur Abwiegung unterschiedlicher Kleinstmengen desselben Stoffes in eine entsprechende Vorstandslage zu dem Gehäuse anordbar. Die unterschiedlichen Vorstandslagen bzw. Abstände beispielsweise zu einer Gerätewandung können durch Markierungen oder Rastungen vorgegeben werden. Die Wägung erfolgt hierbei zunächst durch Verlagerung der Wiege-Aufnahmefläche in die gewünschte Abwiegeposition, woraufhin die Auswerteelektronik dem Benutzer den Unterschied zwischen dem aktuell aufgelegten Gewicht und einem Referenzgewicht mitteilt. Die Differenzierung nach unterschiedlichen Gewichten findet hierbei über die unterschiedlichen freikragenden Längen des die Wiege-Aufnahmefläche aufweisenden Wiegeteiles statt.

Die muldenförmige Wiege-Aufnahmefläche zur materialabhängig über das Volumen erreichbaren Gewichtsbestimmung ist in einer Weiterbildung des Erfindungsgegenstandes hinsichtlich ihres Aufnahmevolumens veränderbar. So kann beispielsweise ein Schieber vorgesehen sein, über welchen der Benutzer die abzuwiegende Menge durch Änderung des Aufnahmevolumens der Mulde vorgibt.

Der Kleinstmengen-Wiegesensor ist bevorzugt ein kapazitiver oder induktiver Sensor, weiter auch ein Dehnungsmessstreifen. Weiter alternativ ist der Kleinstmengen-Wiegesensor ein optischer Abstandssensor (Triangulationssensor, Lichtlaufzeitmessung, optische Interferometer) oder weiter ein Ultraschallsensor (Laufzeitmessung mit Schall).

Nachstehend ist die Erfindung anhand der beigefügten Zeichnung, die lediglich mehrere Ausführungsbeispiele darstellt, näher erläutert. Es zeigt:
- Fig. 1: eine Küchemaschine der in Rede stehenden Art in perspektivischer Vorderansicht mit einem in eine Benutzungsstellung ausgeschwenktem, gesonderten Wiegeteil in einer ersten Ausführungsform;
- Fig. 2: die Seitenansicht hierzu;
- Fig. 3: eine schematische Darstellung einer in Abhängigkeit von der Verschwenkstellung des gesonderten Wiegeteiles gesteuerten Schaltung;
- Fig. 4: eine schematische Seiten-Ausschnittdarstellung der Küchenmaschine mit einem Wiegeteil in einer zweiten Ausführungsform;
- Fig. 5: eine der Fig. 4 entsprechende Darstellung, jedoch eine dritte Ausführungsform des Wiegeteils betreffend;
- Fig. 6: eine schematische Stirnansicht gegen die Küchenmaschine, partiell aufgebrochen, eine weitere Ausführungsform betreffend;
- Fig. 7: eine weitere der Fig. 4 entsprechende Darstellung, eine weitere Ausführungsform mit an dem Wiegeteil unterseitig angeordnetem Stützfuß betreffend;
- Fig. 8: in einer Darstellung gemäß Fig. 4 eine Ausführungsform mit einen in einem Vorstandsbereich des Wiegeteils befindlichen Kleinstmengen-Wiegesensor;
- Fig. 9: eine der Fig. 8 entsprechende Darstellung, jedoch eine alternative Ausgestaltung hierzu betreffend;
- Fig. 10: in schematisch, partiell aufgebrochener Seitenansicht die Küchenmaschine mit einer Feinstmengen-Wiegeeinrichtung in einer weiteren Ausführungsform, die Nichtbenutzungsstellung betreffend;
- Fig. 11: eine der Fig. 10 entsprechende Darstellung, jedoch die Benutzungsstellung betreffend;
- Fig. 12: eine Detaildarstellung der Ausführungsform gemäß Fig. 10;
- Fig. 13: in schematischer Stirnansicht bei geschnitten dargestelltem Rührgefäß die Anordnung einer Feinstmengen-Wiegeeinrichtung in einer weiteren Ausführungsform;
- Fig. 14: eine schematische, teilweise geschnittene Darstellung des Rührgefäßes in einer Ausführungsform mit integriertem Kleinstmengen-Wiegesensor;
- Fig. 15: eine schematische Seitenansicht der Küchenmaschine mit einer Kleinstmengen-Wiegevorrichtung in einer weiteren Ausführungsform;
- Fig. 16: die Draufsicht hierzu gemäß Pfeil XVI in Fig. 15;
- Fig. 17: eine schematische, partiell geschnittene Ausschnittdarstellung des Gehäuses der Küchenmaschine mit einem muldenförmigen Aufnahmebereich zur materialabhängigen Gewichtsbestimmung einer Kleinstmenge;
- Fig. 18: die Draufsicht hierzu gemäß Pfeil XVIII in Fig. 17;
- Fig. 19: in perspektivischer Ausschnittdarstellung den muldenförmigen Aufnahmebereich in einer weiteren Ausführungsform;
- Fig. 20: eine weitere schematische Seitenansicht der Küchenmaschine mit einer Kleinstmengen-Wiegevorrichtung in einer weiteren Ausführungsform;

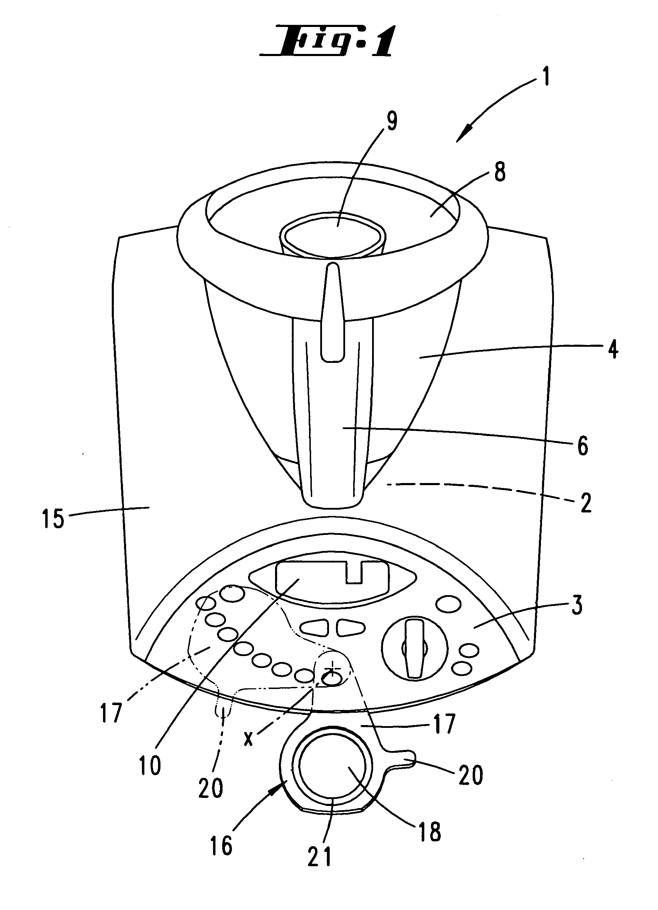

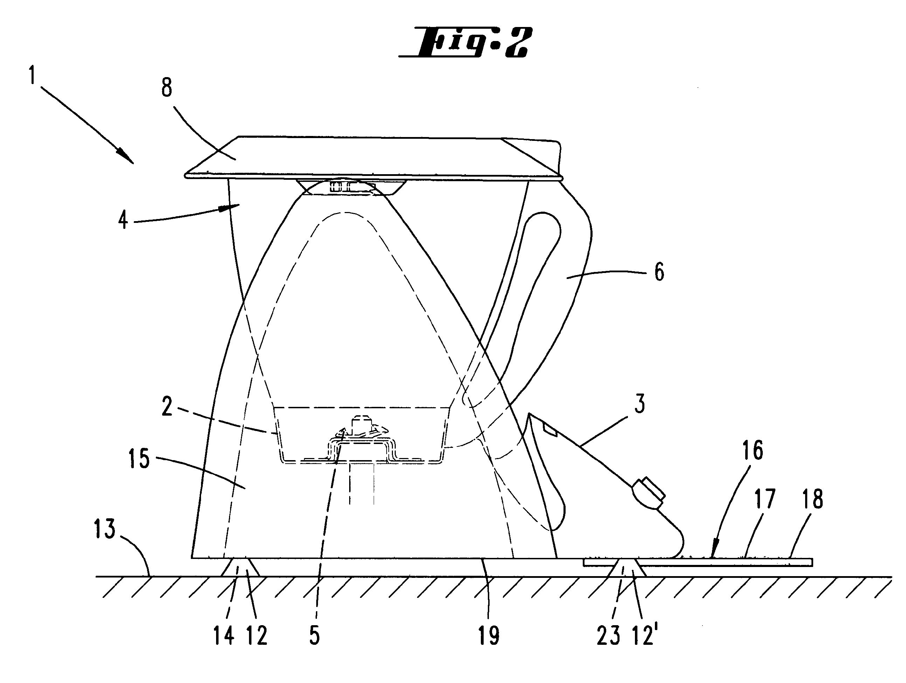

Dargestellt und beschrieben ist zunächst mit Bezug zu den Fig. 1 und 2 eine Küchenmaschine 1 mit einer Rührgefäß-Aufnahme 2 und einem Bedienfeld 3.

Der Küchenmaschine 1 ist ein Rührgefäß 4 zuordbar, in dem dieses in die Rührgefäß-Aufnahme 2 eingesetzt wird. Dem Rührgefäßboden ist zugeordnet ein Rührwerk 5 vorgesehen, welches über einen in der Küchenmaschine 1 unterhalb der Aufnahme 2 angeordneten, nicht dargestellten Elektroantrieb betrieben ist.

Das in die Rührgefäßaufnahme 2 einzusetzende Rührgefäß 4 besitzt einen senkrecht ausgerichteten Haltegriff 6. Der Sockelbereich 7 des Rührgefäßes ist topfartig mit kreisrundem Querschnitt ausgebildet und ist zur Beheizung des Rührgefäßes 4 geeignet bzw. hierzu ausgeformt.

Die mit einem entsprechenden Rührwerk 5 in dem Rührgefäß 4 ausgestattete Küchenmaschine 1 dient in üblicher Weise zum Verrühren, Mixen und/oder Garen von Lebensmitteln, wozu weiter das Rührgefäß 4 mittels eines Deckels 8 verschlossen ist. Letzterer weist insbesondere zum Füllen des Rührgefäßes 4 während des Rührwerkbetriebs eine Einfüllöffnung 9 auf.

Über das Bedienelement 3 ist über Schalter und/oder Taster insbesondere die Rührwerksdrehzahl einstellbar, darüber hinaus auch eine bevorzugt vorgesehene Heizung für das Rührgefäß 4 zum Garen von Lebensmitteln. Weiter weist das Bedienfeld 3 ein Display 10 auf, welches als Teil einer Auswerteeinheit 11 zur Anzeige beispielsweise der Rührwerksdrehzahl oder der Heiztemperatur dient und weiter, wie insbesondere im Zusammenhang mit vorliegender Erfindung vorgesehen, zur Gewichtsanzeige herangezogen wird.

Die Küchenmaschine 1 weist darüber hinaus eine integrierte Waagenfunktion auf. So ist die Küchenmaschine 1 über insgesamt drei im Grundriss in Dreiecksform angeordnete Stellfüße 12 auf einer Standfläche 13 abgestellt, in welchen Stellfüßen 12 Grobmengen-Wiegesensoren 14 angeordnet sind. Letztere erfassen das Gesamtgewicht der Küchenmaschine 1 inklusive des Rührgefäßes 4 und die in das Rührgefäß 4 eingebrachten Zutaten. In diesem Zusammenhang wird auf die eingangs genannte Patentanmeldung verwiesen, so insbesondere hinsichtlich der Funktionsweise der Wiegesensoren 14 und deren Auswertung.

Das Sensorsignal der Grobmengen-Wiegesensoren 14 wird an die Auswerteinheit 11 bzw. an das Display 10 zur Anzeige des Gewichtswertes übermittelt.

Zur Gebrauchsverbesserung einer wie vorgestellten Küchenmaschine 1 mit integrierter Grobmengen-Waagefunktion sind nachstehend verschiedene Ausführungsformen einer Vorrichtung beschrieben, mit welcher der Benutzer Kleinstmengen von Zutaten im Bereich weniger Gramm bzw. im Bereich mehrerer Milligramm bevorzugt unmittelbar an der Küchenmaschine 1 bzw. an dessen Gehäuse 15 bzw. an einem dem Gehäuse 15 bzw. der Maschine 1 zuordbaren Teil zuverlässig abwiegen kann.

Hierzu wird vorgeschlagen, dass die Küchenmaschine 1 einen Aufnahmebereich 16 besitzt, der eine gesonderte, zur Benutzung freiliegende oder in einen Freistand überführbare, an einem Wiegeteil 17 ausgebildete Wiege-Aufnahmefläche 17 aufweist, auf welche Wiege-Aufnahmefläche 18 die abzuwiegenden Zutaten aufgetragen werden können und über welche das Gewicht der Zutaten im Gramm- oder Milligrammbereich bestimmt werden kann.

Als zweckmäßig gestaltet sich eine Ausbildung, bei welcher das Wiegeteil 17 so ausgeführt ist, dass dieses im Betrieb der Küchenmaschine 1 bzw. bei Nichtgebrauch des Wiegeteiles 17 in eine Nichtbenutzungsstellung verbracht werden kann, so dass das Wiegeteil 17 dem Benutzer bei der Bedienung der Küchenmaschine 1 nicht stört und lediglich zum Zwecke des Abwiegens kleiner Mengen von Zutaten in eine für das Abwiegen geeignete Lage gebracht wird.

Eine diesbezügliche erste Ausführungsform zeigen die Fig.1 bis 3. Hier ist unterseitig des Gehäuses 15, weiter unterseitig des Gehäusebodens 19 ein im Wesentlichen plattenförmiges Wiegeteil 17 schwenkbar angeordnet. Die Schwenkachse x verläuft hierbei senkrecht zur Gehäusebodenebene. Das Wiegeteil 17 ist mit einer vorkragenden Handhabe 20 versehen, welche in der in Fig. 1 in gestrichelter Linienart wiedergegeben Nichtbenutzungsstellung über die freie Stirnrandkante des Gehäuses 15 zur Anfassung vorkragt.

Zum Gebrauch des Wiegeteiles 17 wird dieses um die Schwenkachse x in dem dargestellten Ausführungsbeispiel etwa um 90° ausgeschwenkt. Die Ausschwenkstellung ist bevorzugt anschlagbegrenzt, kann weiter, wie auch die Nichtbenutzungsstellung, eine Rastung oder dgl. aufweisen.

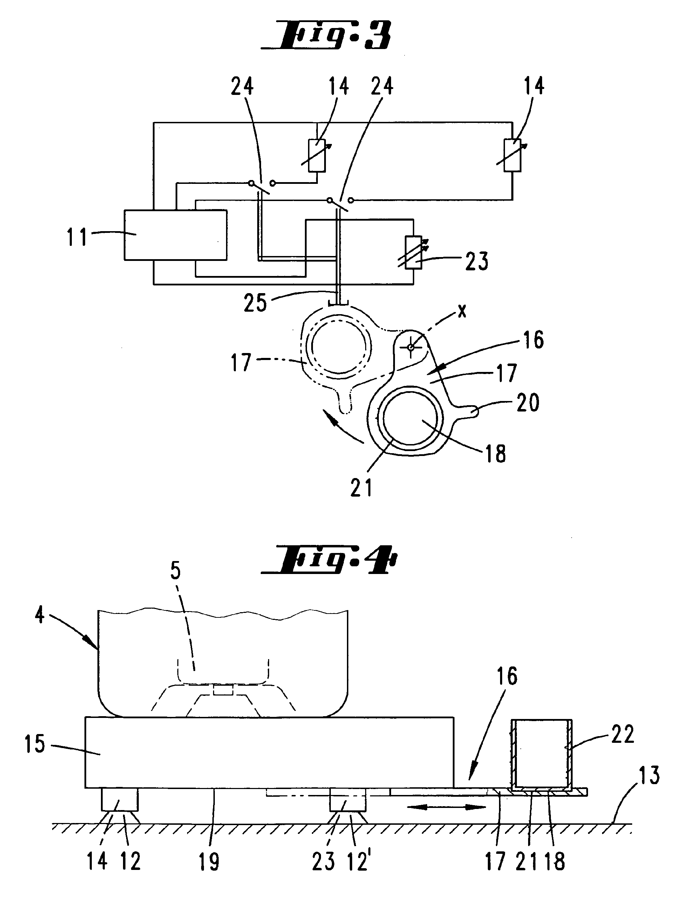

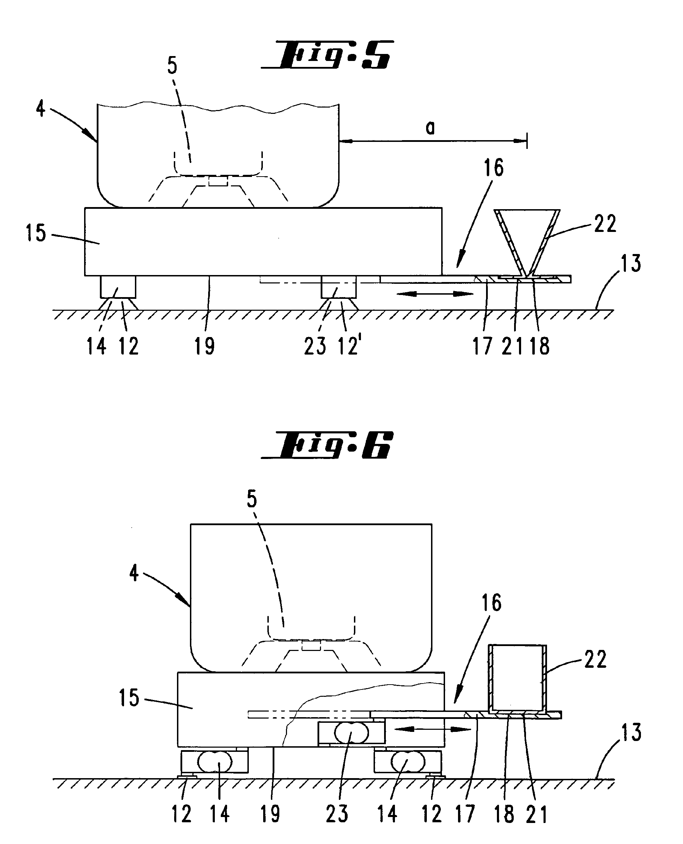

In der Benutzungsstellung gemäß Fig. 1 ragt das Wiegeteil 17 insbesondere mit dessen Wiegeaufnahmefläche 18 stirnseitig über das Gehäuse 15 vor. Die Wiege-Aufnahmefläche 18 liegt frei zur Aufnahme abzuwiegender Kleinstmengen. Alternativ kann das Wiegeteil 17 weiter bei unterflurseitiger Anordnung unter dem Gehäuseboden 19 aus einer Nichtbenutzungsstellung in eine Nutzstellung schiebeverlagerbar angeordnet sein (vgl. Fig. 4 und 5).

Die Wiege-Aufnahmefläche 18 der in den Fig. 1 bis 3 dargestellten ersten Ausführung ist geformt durch eine wannenartige, im Grundriss kreisförmige Vertiefung 21. Dies verhindert ein Abfallen aufgetragener, zu wiegender Kleinstmengen von dem Wiegeteil 17.

Alternativ ist, wie in den weiteren Ausführungsformen in den Fig. 4 und 5 dargestellt ein Kleinstmengen-Messgefäß 22 vorgesehen, dessen Fuß angepasst an die Grundrisskontur der Vertiefung 21 in Letztere einpasst, womit ein sicherer und zudem definierter Stand für das Messgefäß 22 erreicht ist. In das Kleinstmengen-Messgefäß 22 wird die zu wiegende Kleinstmenge eingebracht. Dies erweist sich sowohl hinsichtlich der Hygiene als auch hinsichtlich der Handhabung als vorteilhaft.

Die Gewichtsermittlung erfolgt, wie aus dem eingangs beschriebenen Stand der Technik bekannt, über Wiegesensoren in den Stellfüßen 12. Zur genauen Kleinstmengen-Gewichtsermittlung ist insbesondere in dem dem Wiegeteil 17 zugeordneten Stellfuß 12' ein Kleinstmengen-Wiegesensor 23 angeordnet. Ein solcher Kleinstmengen-Wiegesensor 23 weist eine hohe Genauigkeit auf und ist besonders gut zu kalibrieren und auszuwerten. Grobmengen-Wiegesensoren 14, wie sie in dem Ausführungsbeispiel gemäß den Fig. 1 bis 3 in den weiteren Stellfüßen 12 vorkommen, unterliegen nicht den Genauigkeitsanforderungen sogenannter Feinst-Wiegesensoren.

Die elektronische Beschaltung (schematisch dargestellt in Fig. 3) der Wiegesensoren 14 und 23 ist angepasst an die Stellung des Wiegeteils 17. Weiter ausgehend von einer Ausführungsform mit einem verschwenkbaren Wiegeteil 17, wobei weiter die nachstehende Ausführung der Beschaltung auch geeignet ist für ein schiebeverlagerbares Wiegeteil 17, ist eine Detektierung zumindest einer der Schwenkendstellungen des Wiegeteils 17 vorgesehen. In der in Fig. 3 dargestellten Stellung ist das Wiegeteil 17 zur Benutzung ausgeschwenkt. Die Grobmengen-Wiegesensoren 14 sind über geöffnete Taster 24 von der Auswerteeinheit 11 getrennt. Lediglich der Kleinstmengen-Wiegesensor 23 ist aktiviert, zur Ermittlung des Gewichts von auf die Wiege-Aufnahmefläche 18 aufgebrachten Zutaten.

In der rückgeschwenkten Nichtbenutzungsstellung beaufschlagt das Wiegeteil 17 einen Stößel 25, über welchen die Taster 24 geschlossen werden. Entsprechend sind nunmehr die Grobmengen-Wiegesensoren 14 wie auch der Kleinstmengen-Wiegesensor 13 an die Auswerteinheit 11 angeschlossen. Der Benutzer kann in dieser Konfiguration größere Massen von Zutaten direkt im Rührgefäß 4 abwiegen. Die Konfiguration mit rückgeschwenktem, d. h. für den Benutzer nicht zugänglichen Wiegeteil 17 entspricht daher dem normalen Betriebsmodus der Küchenmaschine 1 mit Waagefunktion.

Auch der Aufbau der Auswerteeinheit 11, insbesondere deren Elektronik ist angepasst derart, dass diese ebenfalls in zwei Betriebsarbeiten arbeiten kann, eine für den Betrieb mit allen drei Wiegesensoren 14 und 23 bei der Grobmengen-Gewichtsermittlung und eine bei aktivierter Feinstwiegevorrichtung. In der Kleinstmengen-Betriebsart wird analog zu dem Wiegesensor 23 mit erhöhter Genauigkeit eine genauere Auswertung des Sensorsignals durchgeführt. In der Umsetzung nach Fig. 3 detektiert die Auswerteinheit 11 den Betriebszustand (Betrieb von Kleinstmengen-Wiegesensor 23 oder Betrieb aller drei Wiegesensoren 14 und 23) dadurch, dass der elektrische Kontakt über die Taster 24 unterbrochen oder geschlossen ist. Darüber hinaus besteht auch die Möglichkeit, dass die Auswerteeinheit 11 über einen Lageschalter (mechanischer Schalter, Reed-Relais oder ähnliches) die Lage des Wiegeteils 17 detektiert (eingeschwenkt oder ausgeschwenkt bzw. eingeschoben oder ausgeschoben) und mit dieser Information den Betriebszustand der Auswerteeinheit 11 auswählt.

Ist ein Wiegeteil 17 mit Vertiefung 21 und/oder separatem Kleinstmengen-Messgefäß 22 zur Aufnahme des Wiegegutes vorgesehen und darüber hinaus eine elektronische Beschaltung der Wiegesensoren 14 und 23 im Sinne der Darstellung in Fig. 3 verwirklicht, ist in einer weiteren Ausführungsform gemäß den Fig. 4 und 5 die Vertiefung 21 in dem Wiegeteil 17, d. h. die Positionierung der Wiege-Aufnahmefläche 18 oder die Positionierung des Kleinstmengen-Messgefäßes 22 auf der Wiege-Aufnahmefläche 18 so ausgeführt, dass eine eindeutige Schwerpunktlage des Wiegegutes erreicht ist. Der Kleinstmengen-Wiegesensor 23 ist in den Darstellungen in den Fig. 4 und 5 in dem dem Wiegeteil 17 zugewandten Stellfuß 12' integriert angeordnet.

Um eine exakte Gewichtsbestimmung zu erreichen, ist in einer Weiterbildung des Erfindungsgegenstandes gemäß der Darstellung in Fig. 5 das Wiegegut in einer definierten Position gehalten. Hierzu ist in dem dargestellten Ausführungsbeispiel das Kleinstmengen-Messgefäß 22 konisch gestaltet. Das Messgefäß 22 verläuft trichterförmig sich nach unten verjüngend, so weiter insbesondere der Aufnahmebereich des Messgefäßes 22. Wird in ein derartig ausgestaltetes Messgefäß Wiegegut eingefüllt, so liegt dessen Schwerpunkt in einem vordefinierten Abstand a zu dem aktivierten Kleinstmengen-Wiegesensor 23, so dass eine genaue Gewichtsbestimmung zufolge der bekannten Hebelarmlänge erreicht werden kann.

In weiterer Ausgestaltung kann durch entsprechende Ausformung der Wiege-Aufnahmefläche 18 bzw. der Vertiefung 21, weiter beispielsweise durch eine trichterartige Ausgestaltung der Vertiefung 21 ebenfalls eine definierte Schwerpunktlage des zu wiegenden Gutes erreicht werden.

Fig. 6 zeigt eine weitere Ausführungsform, bei welcher zusätzlich zu den Grobmengen-Wiegesensoren 14, so weiter mit Bezug zu der ersten Ausführungsform zusätzlich zu drei bodenseitigen Wiegesensoren 14, ein gesonderter Kleinstmengen-Wiegesensor 23 in dem Gehäuse 15 der Küchenmaschine 1 vorgesehen ist. Dargestellt ist ein flächiges Wiegeteil 17 mit translatorischer Auszugsrichtung, wobei auch andere Auszugsbewegungen, wie beispielsweise Schwenkbewegungen möglich sind. Die bodenseitigen Wiegesensoren 14 sind aktiviert, wenn das Wiegeteil 17 in das Gehäuse 15 gänzlich oder zum großen Teil eingeschoben ist, dies weiter zum Abwiegen durch den Benutzer in das Rührgefäß 4 eingebrachter Zutaten. Ist das Wiegeteil 17 hingegen in die Benutzungsstellung, wie in Fig. 6 dargestellt, ausgezogen, so wird der gesonderte Kleinstmengen-Wiegesensor 23 aktiviert, wozu weiter beispielsweise eine Schaltung gemäß der mit Bezug zu der ersten Ausführungsform dargestellten Fig. 3 Anwendung finden kann.

Der separate Kleinstmengen-Wiegesensor 23 liegt zufolge der vorgeschlagenen Anordnung nicht im Kraftfluss der Küchenmaschine 1 zwischen Rührgefäß 4 und Standfläche 13, womit der Kleinstmengen-Wiegesensor 23 lediglich die Gewichtskraft der abzuwiegenden Zutaten auf der Wiege-Aufnahmefläche 18 bzw. in dem Kleinstmengen-Messgefäß 22 und die Gewichtskraft des Wiegeteils 17, nicht jedoch das Gewicht der Küchenmaschine 1 mit eventuell im Rührgefäß 4 befindlichen Zutaten erfährt.

Eine Schiebeverlagerung, Schwenkverlagerung oder auch Ausklappverlagerung des Wiegeteils 17 aus einer Nichtbenutzungsstellung in eine Benutzungsstellung oder umgekehrt erfolgt bevorzugt manuell durch den Benutzer, kann jedoch auch willensbetont per Knopfdruck beispielsweise elektromotorisch erfolgen.

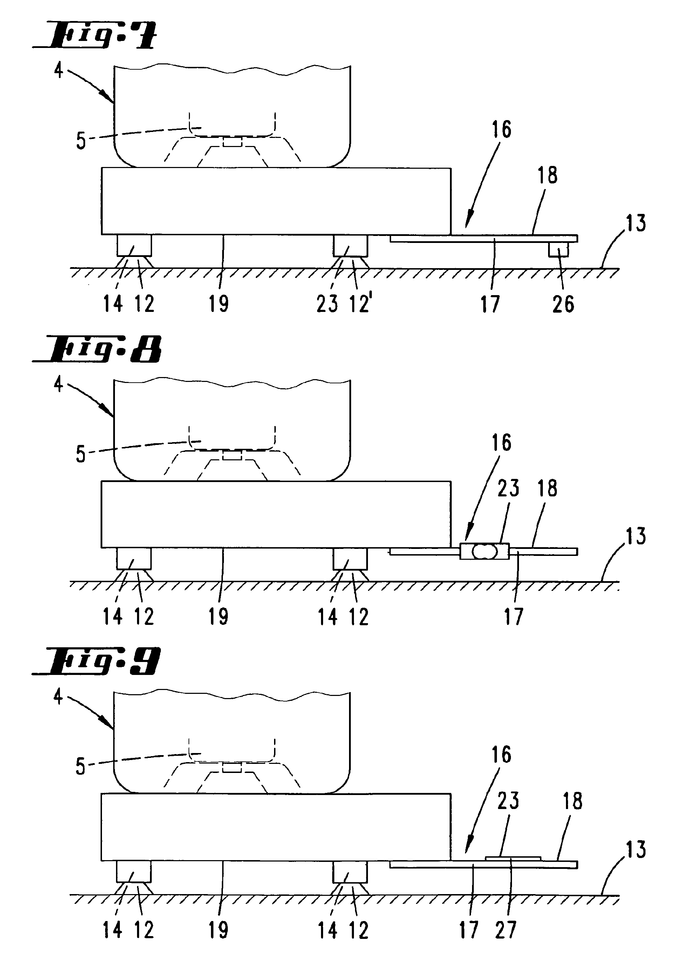

Ist das Wiegeteil 17 als in der Benutzungsstellung frei über die Gehäusebegrenzung abkragendes Teil gestaltet, so ist dieses weiter bevorzugt mit einem mechanischen Schutz gegen Überbelastung ausgestattet. Hierzu ist unterseitig des Wiegeteils ein zusätzlicher Stützfuß 26 angeordnet, der sich in der Wiege-Bereitschaftsstellung entsprechend einer maximalen Absenkbarkeit des Wiegeteils 17 oberhalb der Standfläche 13 der Küchenmaschine 1 befindet (vgl. Fig. 7). Über diesen Stützfuß 26 stützt sich das Wiegeteil 17 bei einer übermäßigen Belastung auf der Standfläche 13 ab, so dass einer übermäßig starken Verformung des Wiegeteiles 17, das zu einer Beschädigung führen könnte, entgegengewirkt ist. Im unbelasteten Zustand ist der Stützfuß 26 zur Standfläche 13 so beabstandet, dass ein Abwiegen üblicher Kleinstmengen auf dem Wiegeteil 17 bzw. auf der Wiege-Aufnahmefläche 18 abstützfrei erfolgen kann.

In weiterer Ausgestaltung gemäß den Fig. 8 und 9 ist der Kleinstmengen-Wiegesensor 23 im, in der Benutzungsstellung freikragenden Vorstandsbereich des Wiegeteiles 17 angeordnet. Entsprechend wirkt das Wiegeteil in Art eines Biegebalkens. In der in Fig. 8 dargestellten Ausführungsform ist ein kapazitiver oder induktiver Wiegesensor 23 etwa mittig der Längserstreckung des Wiegeteiles 17, den Anschluss zum Gehäuse 15 mit dem die Wiegeaufnahmefläche 18 aufweisenden Wiegeteilabschnitt verbindend angeordnet.

Fig. 9 zeigt eine Ausführungsform mit einem auf dem Wiegeteil 17 aufgebrachten Dehnungsmesserstreifen 27 als Kleinstmengen-Wiegesensor 23.

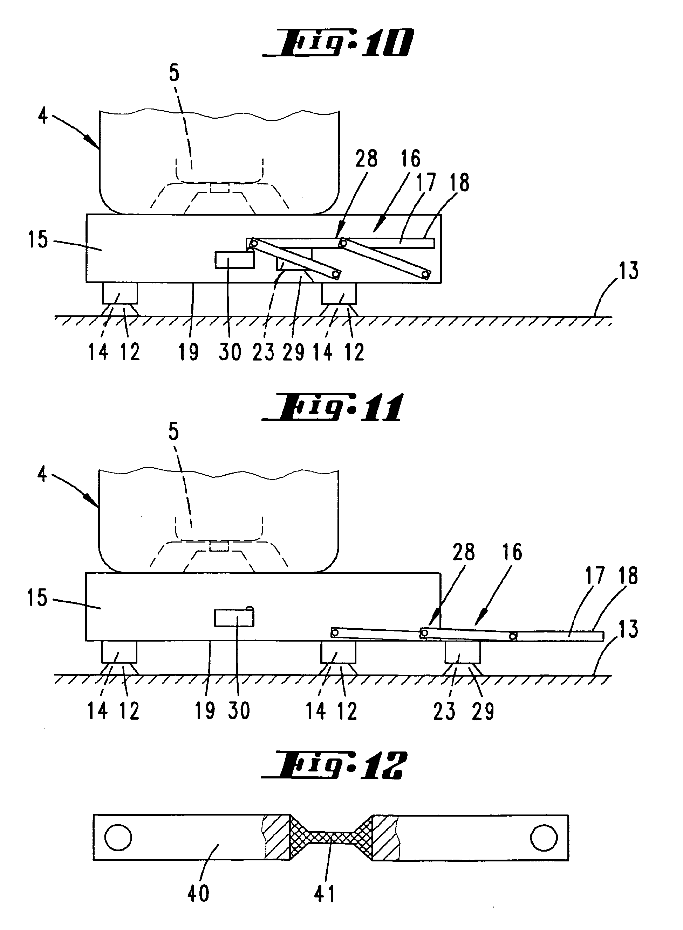

In den Fig. 10 bis 12 ist eine Lösung dargestellt, bei welcher der gesonderte Aufnahmebereich ein über ein Viergelenk 28 ausklappbares Wiegeteil 17 aufweist. In der Benutzungsstellung ist das Wiegeteil 17 in dem dargestellten Ausführungsbeispiel vollständig im Gehäuse 15 aufgenommen. Im ausgeklappten Zustand ragt das Wiegeteil 17 aus dem Gehäuse 15 heraus und kann mit Wiegegut oder einem Kleinstmengen-Messgefäß 22 belastet werden.

Unterseitig des Wiegeteils 17 ist ein gesonderter Kleinstmengen-Wiegesensor 23 in Form eines gesonderten Fußes 29 angeordnet. Dieser wird entsprechend zusammen mit dem Wiegeteil 17 ein- bzw. ausgeklappt. In der ausgeklappten Stellung gemäß Fig. 11 stützt sich das Wiegeteil 17 auf dem Fuß 29 und somit auf den integrierten Kleinstmengen-Wiegesensor 23 zur Gewichtsermittlung ab.

In weiterer Ausgestaltung ist eine mechanische Entkopplung vorgesehen, wozu die Glieder des Viergelenks 28 flexibel, federelastisch ausgeführt sind, so dass nahezu keine dynamischen Störkräfte übertragen werden können. So sind beispielsweise gemäß der Darstellung in Fig. 12 die Koppelglieder 40 aus einem Kunststoffkörper gebildet, der von einem Zwischenelement 41 aus einem gummielastischen Material unterbrochen ist. Dieses Zwischenelement 41 kann eingeklebt oder alternativ als Zweikomponenten-Bauteil gespritzt sein. Die Gummilage wirkt aufgrund ihrer Materialeigenschaften zum einen federndelastisch und zum weiteren dämpfend, d. h. schwingungsreduzierend.

Darüber hinaus kann in Abhängigkeit von einer Benutzung des Wiegeteils 17, beispielsweise detektiert durch einen Schalter 30, der weiter auch eine Umschaltung der Auswerteeinheit 11 von Grobmessung in Feinmessung und umgekehrt bewirkt, Einfluss auf den Betrieb der Küchenmaschine 1 genommen werden, so insbesondere auf die Rührwerksgeschwindigkeit. So wird bevorzugt die Drehzahl des Rührwerks 5 in einer Benutzungsstellung des Wiegeteils 17 zur Kleinstmengen-Gewichtserfassung automatisch auf eine verringerte Drehzahl bis hin zum Abschalten des Antriebs geregelt, um so einer Beeinflussung des Wiegeergebnisses durch Schwingungen des Rührwerkes 5 entgegenzuwirken.

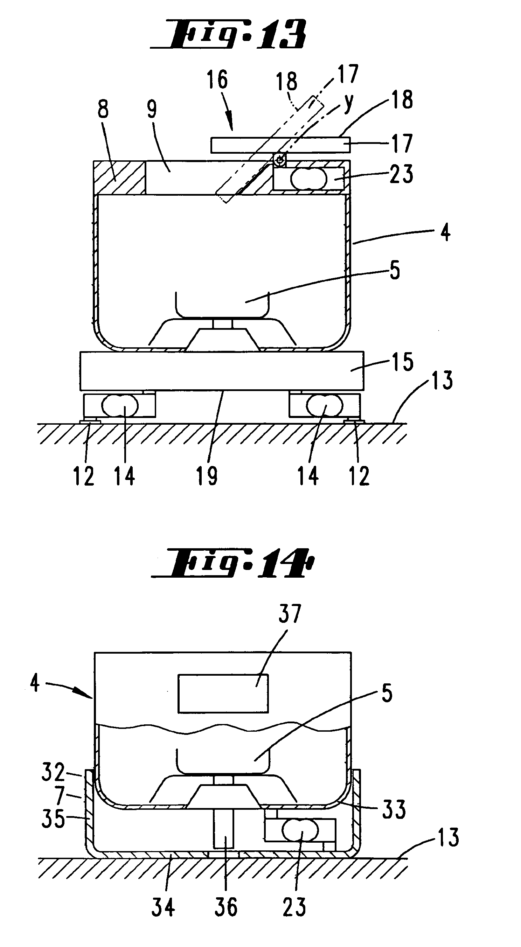

In einer weiteren Ausführung gemäß der Darstellung in Fig. 13 ist die Küchenmaschine 1 auf Stellfüße 12 aufgestellt, in welchen Grobmengen-Wiegesensoren 14 beispielsweise in Form von Dehnungsmessstreifen integriert sind. Diese werden zusätzlich zu dem Wiegegut in dem Rührgefäß 4 auch durch das gesamte Gerätegewicht belastet. Sie werden daher bevorzugt für den Schwerlastbereich (typischerweise bis zu etwa 10 Kg) ausgelegt. Zum Zuwiegen kleinerer Mengen ist auf dem Deckel 8 ein gesonderter Aufnahmebereich 16 mit einem Wiegeteil 17 vorgesehen, welches auf einen in dem Deckel 8 integriert angeordneten Kleinstmengen-Wiegesensor 23 wirkt. Diese Waagenanordnung wird nicht durch das Gerätegewicht belastet und kann daher besonders gut für Messungen kleinerer Mengen ausgelegt werden.

Das in einer Benutzungsstellung gemäß Fig.13 horizontal ausgerichtete und mit einer, beispielsweise durch eine Vertiefung ausgebildeten Wiege-Aufnahmefläche 18 versehene Wiegeteil 17 ist des Weiteren um eine horizontale Achse y schwenkbar gehaltert, um so auf dem Wiegeteil 17 abgewogene Zutaten unmittelbar durch Verschwenken um die Achse y durch die benachbarte Einfüllöffnung 9 in das Rührgefäß 4 zur weiteren Verarbeitung zu übertragen.

Alternativ ist das beispielsweise tellerförmige Wiegeteil 17 auch lediglich auf einem auf den Kleinstmengen-Wiegesensor 23 wirkenden Zapfen steckgehaltert und entsprechend abnehmbar von diesem ausgeformt.

Auch kann gemäß der Darstellung in Fig. 14 die Kleinstmengen-Gewichterfassung in der Bodengruppe 32 des Rührgefäßes 4 erfolgen. Hierzu ist die Bodengruppe 32 als Doppelboden gestaltet, nämlich gebildet zum einen durch den rührgefäßseitigen Bodenabschnitt 33 und zum Weiteren durch einen Topfboden 34 eines den Bodenbereich des Rührgefäßes 4 übergreifenden Bodentopfes 35. Der Kleinstmengen-Wiegesensor 23 ist zwischen Bodenabschnitt 33 und Topfboden 34 positioniert, wobei dieser ausschließlich die mechanische Verbindung zwischen dem Rührgefäß 4 und dem Bodentopf 35 bildet. Hierdurch kann eindeutig das Gewicht des Rührgefäßes 4 und dessen Inhalts bestimmt werden. Die Seitenwandung des Rührgefäßes 4 und die Antriebswelle 36 des Rührwerks 5 berühren nicht den Topfboden 34, stellen somit keine Verfälschung der Wägung dar.

In bevorzugter Ausgestaltung ist der Kleinstmengen-Wiegesensor 23 dann aktiviert, wenn das Rührgefäß 4 aus der Küchenmaschine 1 bzw. aus der Rührgefäß-Aufnahme 2 entnommen ist und die Antriebswelle 36 des Rührwerks 5 nicht im Eingriff zum Antrieb in der Küchenmaschine 1 steht.

Das zu ermittelnde Gewicht der in dieser Ausführungsform unmittelbar in das Rührgefäß 4 einzufüllenden Kleinstmenge wird in dem dargestellten Ausführungsbeispiel über eine Auswerteelektronik und ein gesondertes Display 37 unmittelbar am Rührgefäß 4 angezeigt. Alternativ besteht die Möglichkeit, die Gewichtsinformation über ein dünnes Kabel oder drahtlos optisch oder per Funk an die Küchenmaschine 1 zu übertragen und dort auszuwerten sowie über das Display 10 anzuzeigen.

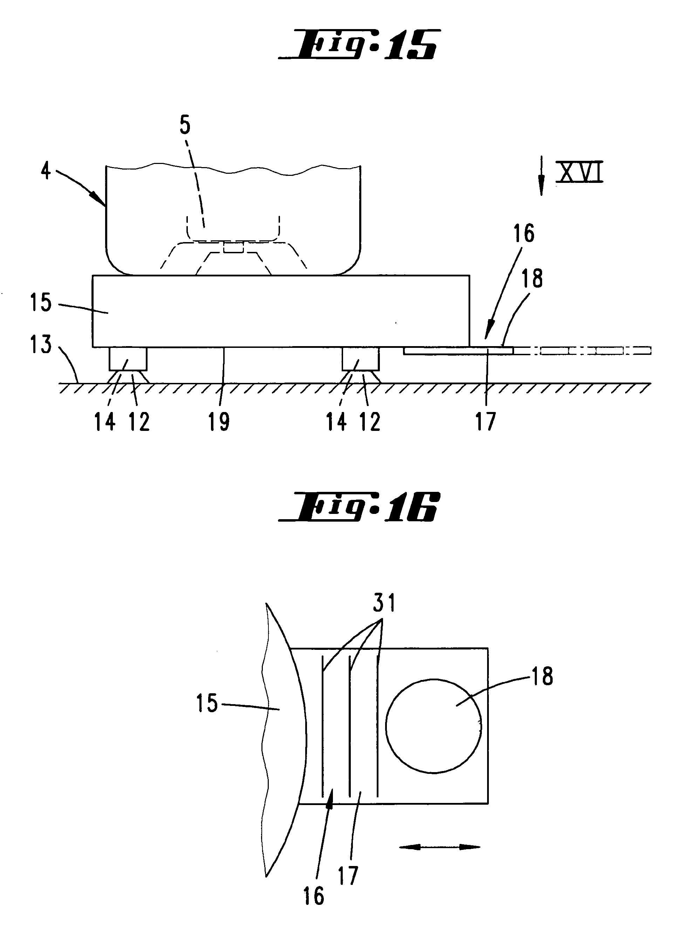

Ein separates Wiegeteil 17, welches vom Benutzer aus dem Gehäuse 15 ausgeklappt oder ausgeschoben werden kann, kann weiter gemäß den Darstellungen in den Fig. 15 und 16 so ausgeführt sein, dass das Wiegeteil 17 unterschiedlich weit, bevorzugt leicht überlaufbar rastend aus dem Gerät herausgezogen oder geschwenkt werden kann. Die unterschiedlichen, bevorzugt durch die Rastung definierten Abstände sind durch Markierungen 31 auf der Oberfläche des Wiegeteiles 17 vorgegeben. Die Kleinstmengenwägung wird hierbei so durchgeführt, dass der Benutzer das Wiegeteil 17 in die gewünschte, durch die Markierung 31 vordefinierte Lage verbringt, wonach die Auswerteeinheit 11 dem Benutzer über das Display 10 den Unterschied zwischen dem aktuell aufgelegten Gewicht und einem der jeweiligen Markierung 31 entsprechenden Referenzgewicht mitteilt. Die Differenzierung nach unterschiedlichen Gewichten findet über die unterschiedlichen Auszugslängen des Wiegeteiles 17 statt, also hebelarmabhängig.

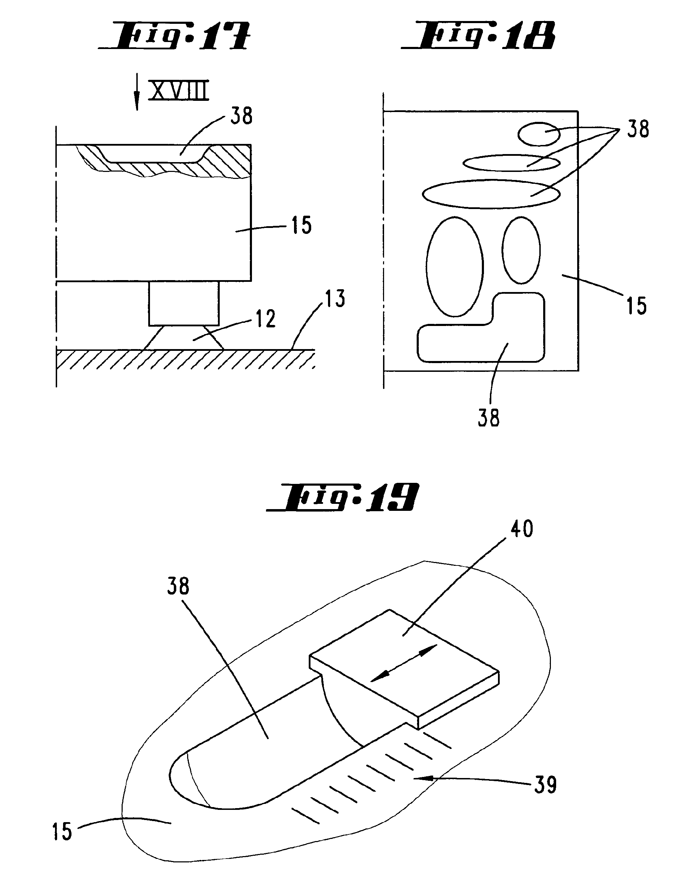

Die Fig. 17 und 18 zeigen eine Ausführungsform, bei welcher der Aufnahmebereich 16 im Bereich des Gehäuses 15 muldenförmig gestaltet ist derart, dass materialabhängig über das Volumen eine Gewichtsbestimmung erlaubt ist. So wird anstelle der Gewichtskraft das Volumen des Wiegegutes bestimmt. Bei bekannter Dichte des Wiegegutes kann hierdurch die Masse bestimmt werden.

Hierzu ist die muldenartige Vertiefung 38 in der Gehäusewandung vorgesehen, welche Vertiefung 38 ein bekanntes Volumen eines Wiegegutes aufnehmen kann. Anstelle einer Mulde können auch sonstige Vertiefungen oder Nuten in entsprechender Größe vorgesehen sein. Weiter kann der so gestaltete Aufnahmebereich 16 auch ein Bereich eines Anbauteils der Küchenmaschine 1 sein, beispielsweise ein Teil des Rührgefäßes 4, insbesondere ausgeformt im Bereich des Deckels 8, weiter auch in einem Zubehörteil der Küchenmaschine 1.

Gemäß der Darstellung in Fig. 18 weist die Küchenmaschine 1 insbesondere auf einem eben ausgestalteten Gehäuseabschnitt eine Mehrzahl von muldenartigen Vertiefungen 38 mit unterschiedlichen Größen auf, um so unterschiedliche Volumen abmessen zu können. Für Zutaten, die in kleinen Mengen zugewogen werden (zum Beispiel Gewürze, Salz, Trockenhefe oder ähnliches) kann die benötigte Masse in ein Volumen umgerechnet werden, welches dann dem Volumen einer der Vertiefungen 38 entspricht.

Eine Weiterbildung der vorbeschriebenen Lösung zeigt die Darstellung in Fig. 19. Hier ist lediglich eine muldenartige Vertiefung 38 vorgesehen, deren Volumen über einen Schieber 39 unterschiedlich eingestellt werden kann, so dass der Benutzer die abzuwiegende Menge vorgeben kann. Hierzu ist weiter der muldenartigen Vertiefung 38 eine Skala 39 zugeordnet.

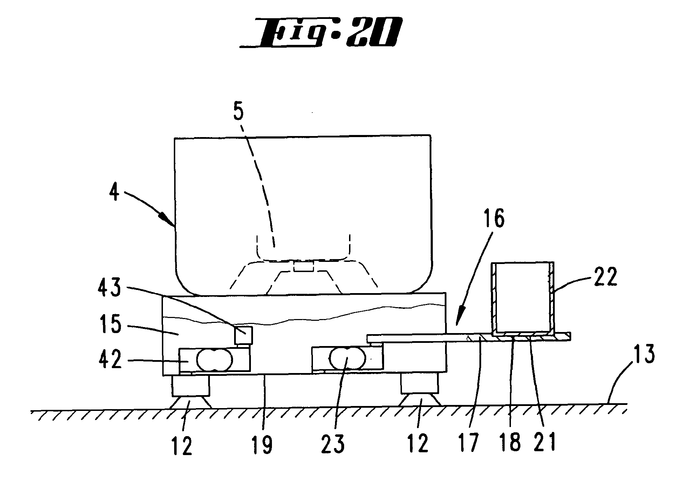

Fig. 20 zeigt eine Ausgestaltung basierend auf der Ausführungsform gemäß Fig. 6. In dem Gehäuse 15 ist ein weiterer Wiegesensor 42 angeordnet, dem eine Referenzmasse 43 zugeordnet ist. In dieser Ausführungsform bestimmt der Kleinstmengen-Wiegesensor 23 nicht unmittelbar das Gewicht im Messgefäß 22. Vielmehr ermittelt die Auswerteelektronik die Signaldifferenz zwischen dem Wiegesensor 42 mit der Referenzmasse 43 und dem Kleinstmengen-Wiegesensor 23. Aus der Signaldifferenz kann das aufgelegte Gewicht ermittelt werden.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

### BEZUGSZEICHENLISTE

- 1: Küchenmaschine
- 2: Rührgefäß-Aufnahme
- 3: Bedienfeld
- 4: Rührgefäß
- 5: Rührwerk
- 6: Haltegriff
- 7: Sockelbereich
- 8: Deckel
- 9: Einfüllöffnung
- 10: Display
- 11: Auswerteeinheit
- 12: Stellfüße
- 12': Stellfuß
- 13: Standfläche
- 14: Grobmengen-Wiegesensor
- 15: Gehäuse
- 16: Aufnahmebereich
- 17: Wiegeteil
- 18: Wiege-Aufnahmefläche
- 19: Gehäuseboden
- 20: Handhabe
- 21: Vertiefung
- 22: Kleinstmengen-Messgefäß
- 23: Kleinstmengen-Wiegesensor
- 24: Taster
- 25: Stößel
- 26: Stützfuß
- 27: Dehnungsmessstreifen
- 28: Viergelenk
- 29: Fuß
- 30: Schalter
- 31: Markierungen
- 32: Bodengruppe
- 33: Bodenabschnitt
- 34: Topfboden
- 35: Bodentopf
- 36: Antriebswelle
- 37: Display
- 38: Vertiefung
- 39: Skala
- 40: Koppelglied
- 41: Zwischenelement
- 42: Wiegesensor
- 43: Referenzmasse

- a: Abstand
- x: Schwenkachse
- y: Achse

## Patentansprüche

1. Küchenmaschine (1) mit einem Rührgefäß (4) und einer Wiegevorrichtung sowie einem Gehäuse (15) mit einer Rührgefäß-Aufnahme (2), weiter mit einem Elektromotor für ein Rührwerk (5) in dem Rührgefäß (4), wobei der Boden (34) des Rührgefäßes (4) gegebenenfalls aufheizbar ist, wobei weiter ein Aufnahmebereich (16) der Küchenmaschine (1) zur Aufnahme einer Abwiegemenge dient, wobei der Aufnahmebereich (16) eine gesonderte, zur Benutzung freiliegende oder in einen Freistand überführbare, an einem Wiegeteil (17) ausgebildete Wiege-Aufnahmefläche (18) aufweist, **dadurch gekennzeichnet, dass** die Wiege-Aufnahmefläche (18) integriert, durch eine muldenförmige Gestaltung des Aufnahmebereiches, mit einem Kleinstmengen-Messgefäß ausgebildet ist, derart, dass materialabhängig über das Volumen eine Gewichtsbestimmung ermöglicht ist, und dass entweder eine Mehrzahl von muldenförmigen Vertiefungen (38) mit unterschiedlichen Größen, um so unterschiedliche Volumen abmessen zu können, vorgesehen sind, oder dass lediglich eine muldenartige Vertiefung (38) vorgesehen ist, deren Volumen über einen Schieber (39) unterschiedlich eingestellt werden kann, so dass der Benutzer die abzuwiegende Menge vorgeben kann.

2. Küchenmaschine nach Anspruch 1, **dadurch gekennzeichnet, dass** der Aufnahmebereich (16) auf einen gesonderten Kleinstmengen-Wiegesensor (23) wirkt und/oder dass das Kleinstmengen-Messgefäß (22) konisch oder trichterförmig gestaltet ist.

3. Küchenmaschine nach einem der vorhergehenden Ansprüche, **dadurch gekennzeichnet, dass** an der Küchenmaschine (1) mehrere Wiegesensoren (14, 23) vorgesehen sind, wobei ein Wiegesensor als Kleinstmengen-Sensor (23) ausgebildet ist.

4. Küchenmaschine nach einem der vorhergehenden Ansprüche, **dadurch gekennzeichnet, dass** bei einer, beispielsweise durch Ziehen oder Schwenken aktivierten, Kleinstmengenmessung die zur Grobmessung dienenden Wiegesensoren (14) deaktiviert sind.

5. Küchenmaschine nach einem der vorhergehenden Ansprüche, **dadurch gekennzeichnet, dass** sowohl ein Grob- (14) als auch ein Kleinstmengen-Wiegesensor (23) auf eine selbe Auswerteeinheit (11) geschaltet ist und/oder dass ein Kleinstmengen-Wiegesensor (23) in einem Gerätefuß (12') angeordnet ist.

6. Küchenmaschine nach einem der vorhergehenden Ansprüche, **dadurch gekennzeichnet, dass** der Rührgefäßdeckel (8) ein einen Kleinstmengen-Wiegesensor (23) aufweisendes Wiegeteil (17) aufweist und/oder dass eine an dem Rührgefäßdeckel (8) angeordnete Wiege-Aufnahmefläche (18) an einem beweglich an dem Rührgefäßdeckel (8) angebrachten Wiegeteil (17) ausgebildet ist.

7. Küchenmaschine nach einem der vorhergehenden Ansprüche, **dadurch gekennzeichnet, dass** das an dem Gehäuse (15) einhängbare oder schiebeverbundene Wiegeteil (17) einen Stützfuß (26) aufweist, der sich in der Wiege-Bereitschaftsstellung entsprechend einer maximalen Absenkbarkeit des Wiegeteiles (17) oberhalb einer Standfläche (13) der Küchenmaschine (1) befindet und/oder dass die Wiegefunktion während des Rührwerkbetriebs aktivierbar ist, wobei, bevorzugt, die Aktivierung der Wiegefunktion während des Betriebs des Rührwerks (5) mit einer Reduktion der Rührwerksdrehzahl einhergeht.

8. Küchenmaschine nach einem der vorhergehenden Ansprüche, **dadurch gekennzeichnet, dass** mit dem Einhängen oder Ausschieben oder Ausklappen des Wiegeteils (17) eine Abstützung des Wiegeteils auf einem gesonderten, zusätzlichen Fuß (29) erreicht ist, wobei, bevorzugt, der Fuß an dem einhäng-, ausklapp- oder schiebeverlagerbaren Wiegeteil (17) angeordnet ist.

9. Küchenmaschine nach einem der vorhergehenden Ansprüche, **dadurch gekennzeichnet, dass** das Wiegeteil (17) über ein Dämpfungsglied mit dem Gehäuse (15) verbunden ist und/oder dass das auf einen gesonderten Kleinstmengen-Wiegesensor (23) wirkende Geräteteil ein die Innenfläche des Rührgefäßes (4) bildender Bodenabschnitt (33) ist.

10. Küchenmaschine nach einem der vorhergehenden Ansprüche, **dadurch gekennzeichnet, dass** der Kleinstmengen-Wiegesensor (23) unterhalb des die Innenfläche des Rührgefäßes (4) bildenden Bodenabschnitts (33) angeordnet ist.

11. Küchenmaschine nach einem der vorhergehenden Ansprüche, **dadurch gekennzeichnet, dass** das Rührgefäß (4) selbst ein Display (37) aufweist, wobei, bevorzugt, die Kleinstmengen-Abwiegung auf dem Display (37) darstellbar ist.

12. Küchenmaschine nach einem der Ansprüche 5 bis 11, **dadurch gekennzeichnet, dass** die Sensorsignale jedenfalls des Kleinstmengen-Wiegesensors (23) durch Lichtwellen oder elektromagnetische Wellen übertragen werden.

13. Küchenmaschine nach einem der vorhergehenden Ansprüche, **dadurch gekennzeichnet, dass** zwei Wiege-Aufnahmeflächen vorgesehen sind, die gesondert erfasst sind zur Durchführung einer Referenzmessung.

14. Küchenmaschine nach einem der vorhergehenden Ansprüche, **dadurch gekennzeichnet, dass** die Wiege-Aufnahmefläche (18) zur Abwiegung unterschiedlicher Kleinstmengen in entsprechender Vorstandslage zu dem Gehäuse (15) anordbar ist.

15. Küchenmaschine nach einem der vorhergehenden Ansprüche, **dadurch gekennzeichnet, dass** der Kleinstmengen-Wiegesensor (23) ein kapazitiver oder induktiver Sensor, ein Dehnungsmessstreifen (27), ein optischer Abstandssensor oder ein Ultraschallsensor ist.

## Claims

1. Food processor (1) comprising a mixing vessel (4) and a weighing device, and a housing (15) having a mixing-vessel receptacle (2), said food processor further comprising an electric motor for a mixer (5) in the mixing vessel (4), the base (34) of the mixing vessel (4) being able to be heated if necessary, a receiving region (16) of the food processor (1) additionally serving to receive for a quantity to be weighed, the receiving region (16) comprising a separate weighing receiving surface (18) which is exposed for use or can be brought into an exposed state and is formed on a weighing part (17), **characterised in that** the weighing receiving surface (18), is formed, by means of a trough-shaped configuration of the receiving region, so as to be integrated with a small-quantity measuring vessel, such that, depending on the material, weight can be determined by the volume, and **in that** either a plurality of trough-shaped recesses (38) of different sizes are provided in order to be able to measure different volumes, or **in that** only one trough-shaped recess (38) is provided, the volume of which can be adjusted via a slider (39), so that the user can specify the quantity to be weighed.

2. Food processor according to claim 1, **characterised in that** the receiving region (16) acts on a separate small-quantity weighing sensor (23) and/or **in that** the small-quantity measuring vessel (22) is conical or funnel shaped.

3. Food processor according to any of the preceding claims, **characterised in that** a plurality of weighing sensors (14, 23) are provided on the food processor (1), a weighing sensor being formed as a small-quantity sensor (23).

4. Food processor according to any of the preceding claims, **characterised in that** during measurement of a small quantity, which measurement is activated for example by pulling or swivelling, the weighing sensors (14) used for large-size measurement are deactivated.

5. Food processor according to any of the preceding claims, **characterised in that** both a large-size weighing sensor (14) and a small-quantity weighing sensor (23) are connected to the same evaluation unit (11) and/or **in that** a small-quantity weighing sensor (23) is arranged in a device leg (12').

6. Food processor according to any of the preceding claims, **characterised in that** the mixing vessel lid (8) comprises a weighing part (17) having a small-quantity weighing sensor (34) and/or **in that** a weighing receiving surface (18) which is arranged on the mixing vessel lid (8) is formed on a weighing part (17) which is movably attached to the mixing vessel lid (8).

7. Food processor according to any of the preceding claims, **characterised in that** the weighing part (17), which can be suspended on or slidingly connected to the housing (15), comprises a support leg (26), which is located above a base (13) of the food processor (1) in the stand-by weighing position corresponding to a maximum vertical lowerability of the weighing part (17) and/or **in that** the weighing function can be activated during the operation of the mixer, the activation of the weighing function during the operation of the mixer (5) preferably being associated with a reduction in the mixer speed.

8. Food processor according to any of the preceding claims, **characterised in that** by suspending or sliding out or opening out the weighing part (17), the weighing part can be supported on a separate, additional leg (29), the leg preferably being arranged on the weighing part (17) that can be suspended, opened out or slidingly displaced.

9. Food processor according to any of the preceding claims, **characterised in that** the weighing part (17) is connected to the housing (15) by means of an attenuator and/or **in that** the part of the device that acts on a separate small-quantity weighing sensor (23) is a base portion (33) that forms the inner surface of the mixing vessel (4).

10. Food processor according to any of the preceding claims, **characterised in that** the small-quantity weighing sensor (23) is arranged below the base portion (33) that forms the inner surface of the mixing vessel (4).

11. Food processor according to any of the preceding claims, **characterised in that** the mixing vessel (4) itself comprises a display (37), the small-quantity weight preferably being able to be shown on the display (37).

12. Food processor according to any of claims 5 to 11, **characterised in that**, in any case, the sensor signals of the small-quantity weighing sensor (23) are transmitted via light waves or electromagnetic waves.

13. Food processor according to any of the preceding claims, **characterised in that** two weighing receiving surfaces are provided, which are detected separately in order to carry out a reference measurement.

14. Food processor according to any of the preceding claims, **characterised in that** the weighing receiving surface (18) can be arranged in a protruding position with respect to the housing (15) in order to weigh different small quantities.

15. Food processor according to any of the preceding claims, **characterised in that** the small-quantity weighing sensor (23) is a capacitive or inductive sensor, a strain gauge (27), an optical distance sensor or an ultrasonic sensor.

## Revendications

1. Robot ménager (1) comportant un bol de mélange (4) et un dispositif de pesage ainsi qu'un boîtier (15) équipé d'un logement pour bol de mélange (2), comportant en outre un moteur électrique pour un agitateur-mélangeur (5) dans le bol de mélange (4), sachant que le fond (34) du bol de mélange (4) peut être éventuellement chauffé, sachant qu'en outre une zone de réception (16) du robot ménager (1) sert à recevoir une quantité à peser, sachant que la zone de réception (16) présente une surface de réception pour le pesage (18) séparée, disponible pour l'utilisation ou pouvant être amenée dans un état de disponibilité, réalisée au niveau d'une partie de pesage (17), **caractérisé en ce que** la surface de réception pour le pesage (18) est réalisée de manière intégrée, grâce à une configuration en forme d'auge de la zone de réception, avec un bol de mesure de petites quantités de telle manière qu'il est possible de déterminer le poids en fonction de la matière par le volume, et **en ce que** soit une pluralité de creux en forme d'auge (38) présentant diverses dimensions afin de pouvoir mesurer ainsi divers volumes est prévue soit un seul creux en forme d'auge (38) est prévu, dont le volume peut être ajusté de manière variée par un poussoir (39) de sorte que l'utilisateur peut prédéfinir la quantité à peser.

2. Robot ménager selon la revendication 1, **caractérisé en ce que** la zone de réception (16) agit sur un capteur de pesage pour petites quantités (23) séparé, et/ou **en ce que** le bol de mesure de petites quantités (22) est configuré de manière à présenter une forme conique ou une forme d'entonnoir.

3. Robot ménager selon l'une quelconque des revendications précédentes, **caractérisé en ce que** plusieurs capteurs de pesage (14, 23) sont prévus au niveau du robot ménager (1), sachant qu'un capteur de pesage est réalisé comme un capteur pour petites quantités (23).

4. Robot ménager selon l'une quelconque des revendications précédentes, **caractérisé en ce que** dans le cas d'une mesure de petites quantités activée par exemple par traction ou pivotement, les capteurs de pesage (14) servant à la mesure en vrac sont désactivés.

5. Robot ménager selon l'une quelconque des revendications précédentes, **caractérisé en ce qu'**aussi bien un capteur de pesage en vrac (14) qu'un capteur de pesage pour petites quantités (23) sont commutés sur une même unité d'évaluation (11), et/ou **en ce qu'**un capteur de pesage pour petites quantités (23) est disposé dans un pied de l'appareil (12').

6. Robot ménager selon l'une quelconque des revendications précédentes, **caractérisé en ce que** le couvercle du bol de mélange (8) présente une partie de pesage (17) présentant un capteur de pesage pour petites quantités (23), et/ou **en ce qu'**une surface de réception de pesage (18) disposée au niveau du couvercle du bol de mélange (8) est réalisée au niveau d'une partie de pesage (17) installée de manière mobile au niveau du couvercle du bol de mélange (8).

7. Robot ménager selon l'une quelconque des revendications précédentes, **caractérisé en ce que** la partie de pesage (17) pouvant être accrochée au niveau du boîtier (15) ou pouvant être reliée par coulissement présente un pied d'appui (26) qui se trouve dans la position « prêt à l'utilisation pour le pesage » de manière à correspondre à une aptitude au déplacement vers le bas maximale de la partie de pesage (17) au-dessus d'une surface de pose (13) du robot ménager (1), et/ou **en ce que** la fonction de pesage peut être activée au cours du fonctionnement de l'agitateur-mélangeur, sachant que de préférence l'activation de la fonction de pesage va de pair lors du fonctionnement de l'agitateur-mélangeur (5) avec une réduction de la vitesse de rotation de l'agitateur-mélangeur.

8. Robot ménager selon l'une quelconque des revendications précédentes, **caractérisé en ce que** l'accrochage ou le coulissement ou le basculement de la partie de pesage (17) permet à la partie de pesage de s'appuyer sur un pied (29) supplémentaire séparé, sachant que de préférence le pied est disposé au niveau de la partie de pesage (17) pouvant être accrochée, basculée ou déplacée par coulissement.

9. Robot ménager selon l'une quelconque des revendications précédentes, **caractérisé en ce que** la partie de pesage (17) est reliée par l'intermédiaire d'un organe d'amortissement au boîtier (15), et/ou **en ce que** la partie de l'appareil agissant sur un capteur de pesage pour petites quantités (23) séparé est une section de fond (33) formant la surface intérieure du bol de mélange (4).

10. Robot ménager selon l'une quelconque des revendications précédentes, **caractérisé en ce que** le capteur de pesage pour petites quantités (23) est disposé sous la section de fond (33) formant la surface intérieure du bol de mélange (4).

11. Robot ménager selon l'une quelconque des revendications précédentes, **caractérisé en ce que** le bol de mélange (4) présente lui-même un écran d'affichage (37), sachant que de préférence le pesage des petites quantités peut être représenté sur l'écran d'affichage (37).

12. Robot ménager selon l'une quelconque des revendications 5 à 11, **caractérisé en ce que** les signaux de capteur du capteur de pesage pour petites quantités (23) sont en tout état de cause transmis par des ondes lumineuses ou des ondes électromagnétiques.

13. Robot ménager selon l'une quelconque des revendications précédentes, **caractérisé en ce que** deux surfaces de réception de pesage sont prévues, lesquelles sont détectées de manière séparée aux fins de la mise en oeuvre d'une mesure de référence.

14. Robot ménager selon l'une quelconque des revendications précédentes, **caractérisé en ce que** la surface de réception de pesage (18) servant à peser diverses petites quantités peut être disposée dans une position saillante correspondante par rapport au boîtier (15).

15. Robot ménager selon l'une quelconque des revendications précédentes, **caractérisé en ce que** le capteur de pesage pour petites quantités (23) est un capteur capacitif ou inductif, une jauge extensométrique (27), un capteur de distance optique ou un capteur à ultrasons.
